# FASCICULE DE BREVET EUROPEEN

(11) **EP 1 108 898 B1**
(45) Date de publication et mention de la délivrance du brevet: **21.04.2004**
(21) Numéro de dépôt: 00403569.7
(22) Date de dépôt: 18.12.2000
(51) Int. Cl.: F16B 15/00

(54) **Agrafe de fixation pour matériau tendre**
Befestigungsklammer für weiches Material
Fixation staple for soft materials

(30) Priorité: 17.12.1999 FR 9915964
(43) Date de publication de la demande: 20.06.2001
(73) Titulaire: SOCIETE DE PROSPECTION ET D'INVENTIONS TECHNIQUES SPIT, 26501 Bourg-Les-Valence Cédex (FR)
(72) Inventeur: Almeras, Roland, 07300 Tournon (FR); Herelier, Patrick, 07300 Tournon (FR)
(74) Mandataire: Bloch, Gérard

(56) Documents cités:
- DE-A- 1 536 724
- FR-A- 2 206 808
- GB-A- 258 924
- GB-A- 2 257 765
- US-A- 2 034 080

## Description

La présente invention concerne les agrafes destinées à fixer des pièces à un matériau tendre de faible densité, sans grande résistance, comme un matériau friable du genre de ceux constitués d'une couche de plâtre entre deux feuilles cartonnées.

Comme pièces à fixer, on peut citer des fils métalliques, des éléments en matière plastique, comme des goulottes d'électricien.

On connaît déjà une agrafe de fixation pour matériau tendre constituée d'un ensemble de deux jambes flexibles s'étendant entre une portion de tête de liaison des jambes et une portion d'extrémité d'introduction, l'ensemble présentant, entre les deux portions de tête et d'extrémité, une portion de discontinuité pour que, lors de son enfoncement dans le matériau, l'une des jambes au moins s'incline par rapport à la portion de tête et assure ainsi une bonne résistance à l'extraction.

Une telle agrafe est connue, notamment par les documents GB 2238591 et DE 3623712.

Dans l'agrafe de ces documents, la jambe inclinable est plus longue que l'autre, pour converger plus facilement vers l'autre lors de l'enfoncement, la portion de discontinuité de l'ensemble s'étendant autour de l'extrémité de la plus courte des jambes.

Certes, quand on enfonce l'agrafe, même si la jambe inclinable est la seule à vraiment s'incliner et si la jambe la plus courte ne s'incline par rapport à la tête que faiblement, l'inclinaison de la grande jambe devrait suffire à assurer la tenue de l'agrafe. Grâce à la différence de longueur des deux jambes de l'agrafe, créant la portion de discontinuité, on devrait éviter, lors de son enfoncement, que les deux jambes restent parallèles entre elles ou que leur inclinaison par rapport à la portion de tête reste invariable en s'enfonçant dans la direction de la force appliquée sur l'agrafe. De surcroît, quand la jambe la plus courte s'enfonce, elle devrait amplifier la convergence des deux jambes.

Toutefois, on constate quand même avec ce type d'agrafe que l'inclinaison des jambes n'est pas toujours parfaite ou efficace.

La présente invention vise à proposer une agrafe mieux appropriée aux matériaux tendres et friables.

A cet effet, l'invention concerne une agrafe de fixation pour matériau tendre du type défini ci-dessus, caractérisé par le fait que les deux jambes sont coudées vers l'intérieur dans la portion de discontinuité de l'ensemble, pour diverger l'une de l'autre lors de l'enfoncement.

Grâce au coude des jambes de l'agrafe, on a rallongé la longueur des jambes, donc leur flexibilité et augmenté ainsi l'assurance de leur divergence et d'une excellente résistance à l'extraction, mais sans pour autant rallonger la longueur d'ensemble de l'agrafe.

De préférence, les jambes sont biseautées de l'intérieur vers l'extérieur jusqu'à leur extrémité d'introduction.

Il est aussi avantageux que les largeurs des portions de tête et d'extrémité d'introduction soient sensiblement égales.

L'agrafe peut être constituée d'un brin de section choisie parmi un cercle, un rectangle et un ovale.

L'invention sera mieux comprise à l'aide de la description suivante d'une forme de réalisation préférée de l'agrafe de l'invention, en référence au dessin annexé, sur lequel
- la figure 1 est une vue de profil de l'agrafe à jambes coudées de l'invention et
- la figure 2 est une vue en coupe de l'agrafe de la figure 1 en position de fixation dans un matériau tendre.

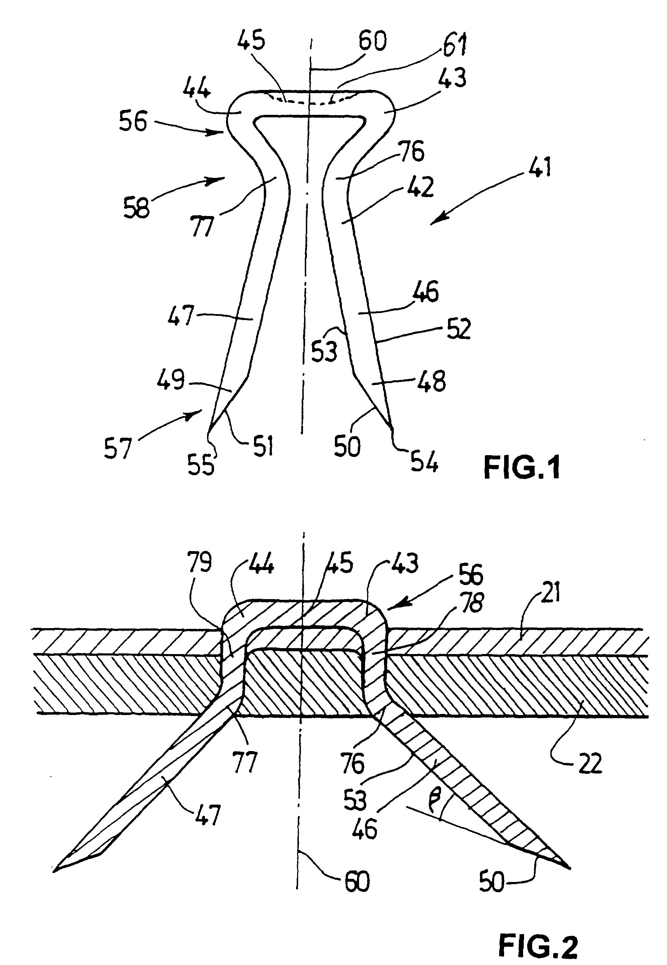

L'agrafe des figures 1 et 2 est une agrafe symétrique 41 (de part et d'autre du plan 60) à jambes divergentes.

En métal ou matière plastique, elle est constituée d'un brin 42 dont la section peut être indifféremment circulaire, rectangulaire, voire ovalisée.

Le brin 42 de l'ensemble d'agrafe 41 a été coudé en quatre endroits (pas à angle droit), pour ménager, entre deux coudes aigus 43, 44 ouverts vers l'intérieur, une tête de liaison 45 et, au-delà, deux jambes 46, 47, donc ici sensiblement de même longueur présentant dans une portion de discontinuité 58, entre les deux portions de tête 56 et d'extrémité 57, deux coudes optus 76, 77, respectivement, en saillie vers l'intérieur de l'agrafe et donc ouverts vers l'extérieur. En d'autres termes, les deux jambes 46, 47 sont coudées 76, 77 vers l'intérieur dans la portion de discontinuité 58 de l'ensemble pour diverger l'une de l'autre lors de l'enfoncement.

Les deux jambes 46, 47 présentent sensiblement la même longueur. Leurs extrémités d'introduction 48, 49, dans la portion d'extrémité 57, sont biseautées en 50, 51, de l'intérieur 53 vers l'extérieur 52. L'angle β du biseau 50, 51 avec l'intérieur 53 est avantageusement compris entre 10 et 30°.

On remarquera qu'il est intéressant d'adopter une largeur de portion de tête de liaison 45 sensiblement égale à la distance entre les pointes d'introduction 54, 55 des deux jambes 46, 47, c'est-à-dire la largeur hors-tout de la portion d'extrémité 57.

En référence à la figure 2, l'agrafe 41 est destinée à fixer une pièce 21 à un matériau support 22. Quand on enfonce l'agrafe, les jambes 46, 47 s'inclinent vers l'extérieur par rapport à la tête de liaison 45 pour diverger l'une de l'autre et assurer ainsi une bonne résistance à l'extraction.

On notera qu'il est avantageux que l'angle d'ouverture des coudes de discontinuité 76, 77 soit compris entre 135° et 160°, que la longueur approximative des segments de jambe 78, 79, entre les coudes extérieurs 43, 44 et les coudes intérieurs 76, 77, soit au plus égale à la somme des épaisseurs de la pièce à fixer 21 et du matériau support 22 et supérieure à la moitié de cette somme d'épaisseur et que la longueur de l'ensemble d'agrafe, de la portion de tête 56 à la portion d'extrémité d'introduction 57, soit au moins égale au double de cette somme d'épaisseur.

On pourrait également prévoir que la tête de liaison de l'agrafe présente une zone affaiblie, de section plus réduite que celle du reste du brin de l'agrafe, pour faciliter sa déformation au moment de sa pose et favoriser ainsi une bonne ouverture ou divergence des deux jambes. Toutes sortes d'affaiblissement sont possibles : réduction de section uniforme sur toute la longueur de la tête, réduction de section limitée à une zone, réduction de section dégressive de part et d'autre d'un plan médian, comme illustré en pointillés 61 sur la figure 1, etc..

## Revendications

1. Agrafe de fixation (41) pour matériau tendre (22) constituée d'un ensemble de deux jambes flexibles (46, 47) s'étendant entre une portion de tête (56) de liaison des jambes et une portion d'extrémité d'introduction (57), l'ensemble présentant, entre les deux portions de tête et d'extrémité, une portion de discontinuité (58) pour que, lors de son enfoncement dans le matériau (22), l'une des jambes (46, 47) au moins s'incline par rapport à la portion de tête (45) et assure ainsi une bonne résistance à l'extraction, **caractérisé par le fait que** les deux jambes (46, 47) sont coudées (76, 77) vers l'intérieur dans la portion de discontinuité (58) de l'ensemble pour diverger l'une de l'autre lors de l'enfoncement.

2. Agrafe selon la revendication 1, dans laquelle les jambes (46, 47) sont biseautées (50, 51) de l'intérieur (53) vers l'extérieur (52) jusqu'à leur extrémité d'introduction (54, 55).

3. Agrafe selon l'une des revendications 1 et 2, dans laquelle les largeurs des portions de tête (56) et d'extrémité d'introduction (57) sont sensiblement égales.

4. Agrafe selon l'une des revendications 1 à 3, constituée d'un brin (42) de section choisie parmi un cercle, un rectangle. et un ovale.

5. Agrafe selon l'une des revendications 1 à 4, dans laquelle la portion de tête de liaison (45) comporte une zone affaiblie (61).

## Patentansprüche

1. Befestigungsklammer (41) für ein weiches Material (22), die aus einer Einheit mit zwei flexiblen Beinen (46, 47) besteht, die sich zwischen einem Kopfteil (56) zur Verbindung der Beine und einem Einführendteil (57) erstrecken, wobei die Einheit zwischen den zwei Kopfund Endteilen einen Diskontinuitätsteil (58) aufweist, damit bei ihrem Versenken im Material (22) zumindest eines der Beine (46, 47) sich relativ zum Kopfteil (45) schrägstellt und auf diese Weise einen guten Widerstand gegen das Herausziehen gewährleistet, **dadurch gekennzeichnet, dass** die zwei Beine (46, 47) in dem Diskontinuitätsteil (58) der Einheit nach Innen umgebogen (76, 77) sind, um sich beim Einsenken voneinander zu entfernen.

2. Klammer nach Anspruch 1, bei der die Beine (46, 47) von Innen (53) nach Außen (52) bis zu ihrem Einführende (54, 55) abgeschrägt (50, 51) sind.

3. Klammer nach einem der Ansprüche 1 und 2, bei der die Breiten des Kopfteils (56) und der Einführendteile (57) im Wesentlichen gleich sind.

4. Klammer nach einem der Ansprüche 1 bis 3, die aus einem Draht (42) mit einem Querschnitt besteht, der kreisförmig, rechteckeckig oder ovalförmig gewählt wird.

5. Klammer nach einem der Ansprüche 1 bis 4, bei der der Verbindungskopfteil (45) einen geschwächten Bereich (61) umfasst.

## Claims

1. Fixing staple (41) for fragile material (22) formed of an assembly of two flexible legs (46, 47) extending between a head portion (56) connecting the legs and an introduction end portion (57), the assembly having, between the two head and end portions, a discontinuity portion (58) so that, when it is driven into the material (22), at least one of the legs (46, 47) slants relative to the head portion (45) and thus provides good resistance to extraction, **characterised by** the fact that the two legs (46, 47) are bent (76, 77) inwardly in the discontinuity portion (58) of the assembly to spread out one away from the other when driven in.

2. Staple as described in claim 1, in which the legs (46, 47) are bevelled (50, 51) from the inside (53) to the outside (52) up to their introduction ends (54, 55).

3. Staple as described in one of claims 1 and 2, in which the widths of the head (56) and introduction end (57) portions are substantially equal.

4. Staple as described in one of claims 1 to 3, formed of a filament (42) having a section selected from a circle, a rectangle and an oval.

5. Staple as described in one of claims 1 to 4, in which the connecting head portion (45) includes a zone of weakness (61).
